# EUROPEAN PATENT APPLICATION

(11) **EP 3 336 558 A1**
(43) Date of publication of application: **20.06.2018**
(21) Application number: 17207656.4
(22) Date of filing: 15.12.2017
(51) Int. Cl.: G01P 13/02, G01P 5/14, G01P 5/26, G01P 21/02, G05D 1/00

(54) **AIR DATA SYSTEM ARCHITECTURE INCLUDING PNEUMATIC AND LASER-BASED SENSOR MEASUREMENTS**

(30) Priority: 15.12.2016 US 201615380353
(71) Applicant: Rosemount Aerospace Inc., Burnsville MN 55306-4898 (US)
(72) Inventor: MILLER, Mark Sherwood, Lakeville, MN 55044 (US); NASLUND, Brian Brent, Chanhassen, MN 55317 (US); KUNIK, William, Lakeville, MN 55044 (US)
(74) Representative: Bridge, Kerry Ann

(57) **Abstract**

A first air data system for providing first aircraft air data parameter outputs is formed by a first electronics channel of a first multi-function probe (MFP) (12A) that is electrically coupled with a first electronics channel of a second MFP (12B) to receive static pressure data from the second MFP (12B). A second air data system for providing second aircraft air data parameter outputs is formed by a second electronics channel of the second MFP (12B) that is electrically coupled with a second electronics channel of the first MFP (12A) to receive static pressure data from the first MFP (12A). A third air data system for providing third aircraft air data parameter outputs is formed by a laser air data sensor that is configured to emit directional light into airflow about the aircraft exterior and to generate the third aircraft air data parameter outputs based on returns of the emitted directional light.

## Description

### BACKGROUND

The present disclosure relates generally to air data systems, and more particularly to air data systems utilizing multi-function probes and laser air data sensors for generating aircraft air data parameter outputs.

Modern aircraft often incorporate air data systems that calculate air data outputs based on measured parameters collected from various sensors positioned about the aircraft. For instance, many air data systems utilize air data probes that measure pneumatic pressure of airflow about the aircraft exterior to generate aircraft air data outputs, such as angle of attack (i.e., an angle between the oncoming airflow or relative wind and a reference line of the aircraft, such as a chord of a wing of the aircraft), calibrated airspeed, Mach number, altitude, or other air data parameters. During sideslip of the aircraft (i.e., a nonzero angle between the direction of travel of the aircraft and the aircraft centerline extending through the nose of the aircraft), compensation of various local (to the probe) parameters or signals, such as angle of attack and static pressure, is advantageous for accurate determination of aircraft air data parameters, such as aircraft angle of attack or aircraft pressure altitude (determined from static pressure measurements).

Increased accuracy achieved through sideslip compensation is particularly relevant in modem aircraft employing advanced control mechanisms that operate in the National Airspace System, as well as to accommodate fly-by-wire or other control systems that may benefit from increased accuracy achieved through sideslip compensation. To this end, many air data systems utilize multiple pneumatic air data probes positioned at opposite sides of the aircraft and cross-coupled to exchange pressure information. Static pressure sensed by an opposite side probe is used to compensate air data parameter outputs for a sideslip condition. In certain air data systems, cross-coupled probes are pneumatically connected so that the pressure signals are averaged between probes. Other air data systems utilize air data probes that are not pneumatically connected, but rather include processors and other electronic components for interchanging electrical signals representative of the pressure information (and other information) between probes. Such probes, having integrated electronics, are often referred to as electronic multi-function probes (MFPs). MFPs reduce the need for pneumatic couplings between the probes, thereby reducing space, cost, and maintenance associated with the pneumatic couplings.

As aircraft systems such as flight control systems and stall protection systems become more highly integrated, complex, and automated, the integrity of air data information used by these aircraft systems becomes increasingly important. As such, these highly complex systems typically utilize redundant inputs of air data information that are measured by independent sources. The independent sources of air data are often desired to be derived from dissimilar equipment to reduce the risk of common mode errors occurring amongst the separate sources of air data. This redundancy, independence, and dissimilarity of air data outputs is strongly recommended worldwide by certification authorities and is typically required for airworthiness certification of the aircraft.

### SUMMARY

In one example, a system includes a first multi-function probe (MFP), a second MFP, and a laser air data sensor. The first MFP includes a first plurality of pressure sensing ports for sensing pressure of airflow about an aircraft exterior. The first MFP has a first electronics channel and a second electronics channel. The second MFP includes a second plurality of pressure sensing ports for sensing the pressure of airflow about the aircraft exterior. The second MFP has a first electronics channel and a second electronics channel. The first electronics channel of the second MFP is electrically coupled with the first electronics channel of the first MFP to form a first air data system providing first aircraft air data parameter outputs. The second electronics channel of the second MFP is electrically coupled with the second electronics channel of the first MFP to form a second air data system providing second aircraft air data parameter outputs. The laser air data sensor forms a third air data system providing third aircraft air data parameter outputs. The laser air data sensor is configured to emit directional light into airflow about the aircraft exterior and to generate the third aircraft air data parameter outputs based on returns of the emitted directional light.

In another example, a method includes generating first aircraft air data parameter outputs from a first electronics channel of a first multi-function probe (MFP) based on pressure of airflow about an aircraft exterior sensed by the first MFP and static pressure data corresponding to static pressure of airflow about the aircraft exterior received from a first electronics channel of a second MFP. The method further includes generating second aircraft air data parameter outputs from a second electronics channel of the second MFP based on pressure of airflow about the aircraft exterior sensed by the second MFP and static pressure data corresponding to static pressure of airflow about the aircraft exterior received from a second electronics channel of the first MFP. The method further includes generating third aircraft air data parameter outputs from a laser air data sensor based on returns of directional light emitted by the laser air data sensor into airflow about the aircraft exterior.

In another example, a system includes a first air data system configured to provide first aircraft air data parameter outputs, a second air data system configured to provide second aircraft air data parameter outputs, and a third air data system configured to provide third aircraft air data parameter outputs. The first air data system includes a first electronics channel of a first multi-function probe (MFP) and a first electronics channel of a second MFP. The first MFP has a first plurality of pressure sensing ports for sensing pressure of airflow about an aircraft exterior. The second MFP has a second plurality of pressure sensing ports for sensing pressure of airflow about the aircraft exterior. The second air data system includes a second electronics channel of the second MFP and a second electronics channel of the first MFP. The third air data system includes a laser air data sensor. The laser air data sensor is configured to emit directional light into airflow about the aircraft exterior and to generate the third aircraft air data parameter outputs based on returns of the emitted directional light. Specifically, the system may comprise a first air data system configured to provide first aircraft air data parameter outputs, the first air data system comprising a first electronics channel of a first multi-function probe (MFP) having a first plurality of pressure sensing ports for sensing pressure of airflow about an aircraft exterior; and a first electronics channel of a second MFP having a second plurality of pressure sensing ports for sensing pressure of airflow about the aircraft exterior; a second air data system configured to provide second aircraft air data parameter outputs, the second air data system comprising a second electronics channel of the second MFP; and a second electronics channel of the first MFP; and a third air data system configured to provide third aircraft air data parameter outputs, the third air data system comprising a laser air data sensor configured to emit directional light into airflow about the aircraft exterior and to generate the third aircraft air data parameter outputs based on returns of the emitted directional light.

### BRIEF DESCRIPTION OF THE DRAWINGS

FIG. 1 is a top plan view of an aircraft in a sideslip condition and including first and second multi-function probes, a laser air data sensor, and a total air temperature sensor.
FIG. 2 is a schematic block diagram illustrating an example air data system architecture including the two multi-function probes, the laser air data sensor, and the total air temperature sensor.
FIG. 3 is a schematic block diagram illustrating another example air data system architecture including the two multi-function probes, two laser air data sensors, and the total air temperature sensor.
FIG. 4 is a schematic cross-sectional view of a dual-channel multi-function probe.

### DETAILED DESCRIPTION

As described herein, an example air data system architecture includes two dual-channel multi-function probes (MFPs) and a laser air data sensor to provide three independent sets of aircraft air data parameter outputs. A first electronics channel of the first MFP is electrically coupled to receive static pressure data from a first electronics channel of the second MFP to form a first air data system providing first aircraft air data parameter outputs that are compensated for aircraft sideslip conditions. A second electronics channel of the second MFP is electrically coupled to receive static pressure data from a second electronics channel of the first MFP to form a second air data system providing second aircraft air data parameter outputs that are compensated for aircraft sideslip conditions. The laser air data sensor forms a third air data system providing third aircraft air data parameter outputs.

The laser air data sensor is configured to emit directional light into an airflow about the aircraft exterior and to generate the third aircraft air data parameter outputs based on returns of the emitted directional light. The laser air data sensor generates the third aircraft air data parameter outputs based on returns from the directional light that is emitted into the airflow and, in some examples, can generate the third aircraft air data parameter outputs without additional pressure (or other) information from, e.g., a cross-side sensor. That is, the laser air data sensor can generate aircraft-level air data parameter outputs (e.g., aircraft angle of attack, aircraft angle of sideslip, aircraft altitude, aircraft airspeed, or other aircraft air data parameter outputs) without requiring cross-side pressure information to compensate local parameters for aircraft sideslip conditions.

Accordingly, an air data system architecture implementing techniques of this disclosure can provide three separate air data systems that provide three independent sets of aircraft air data parameter outputs without requiring a fourth air data sensor to provide, e.g., cross-side pressure or other measurement information to compensate the laser air data sensor outputs for aircraft sideslip conditions. Moreover, the use of the laser air data sensor provides a mechanism for generating aircraft air data parameter outputs that is dissimilar from the pneumatic-based measurements of the MFPs, thereby increasing system dissimilarity.

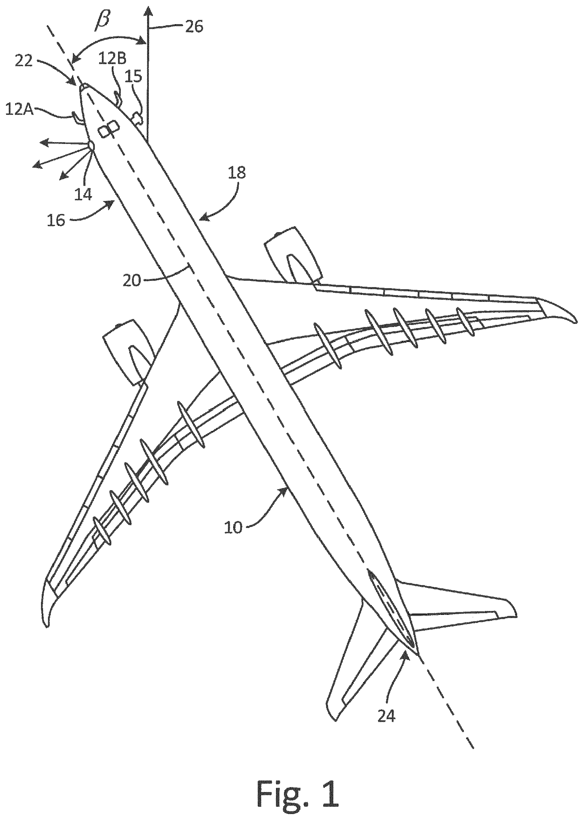

FIG. 1 is a top plan view of aircraft 10 in a sideslip condition and including first multi-function probe (MFP) 12A, second MFP 12B, laser air data sensor 14, and total air data temperature (TAT) sensor 15. As illustrated, aircraft 10 includes first side 16 (or left side) and second side 18 (or right side) that is opposite first side 16 and separated by central plane 20 that extends from nose 22 to tail 24 orthogonal to a plane extending through the wings of aircraft 10. First MFP 12A is disposed at first side 16. Second MFP 12B is disposed at second side 18. In the example of FIG. 1, laser air data sensor 14 is disposed at first side 16 and TAT sensor 15 is disposed at second side 18, though in other examples, laser air data sensor 14 and TAT sensor 15 can be disposed at other locations.

First MFP 12A and second MFP 12B are air data sensing probes, each having a barrel portion configured to extend into an airflow about the exterior of aircraft 10. Each barrel portion includes a plurality of pressure sensing ports including at least a total pressure sensing port at a tip of the barrel portion, alpha pressure sensing ports disposed at a top and bottom of the barrel portion for use in sensing angle of attack of the airflow, and static pressure sensing ports disposed at the top side of the barrel portion and the bottom side of the barrel portion aft of the alpha pressure sensing ports for use in sensing static air pressure of the airflow. Laser air data sensor 14 is a light detection and ranging (LIDAR) sensor (or sensors) configured to emit directional light (e.g., laser light) into the airflow about the exterior of aircraft 10 and to generate aircraft air data parameter outputs based on returns of the emitted directional light, as is further described below. TAT sensor 15 is a total air temperature sensing probe configured to extend into and measure the stagnation (or total) temperature of the airflow and provide total air temperature data to each of first MFP 12A and second MFP 12B for use in generating aircraft air data parameter outputs, such as aircraft true airspeed (TAS) and static air temperature (SAT). While the example of FIG. 1 is described with respect to an air data system architecture including TAT sensor 15, air data system architectures implementing techniques described herein need not include TAT sensor 15 in all examples. For instance, in some examples, such as when first MFP 12A and second MFP 12B do not produce air data parameter outputs that are dependent upon total air temperature (e.g., true airspeed, static air temperature, or other air data parameter outputs), the air data system architecture need not include TAT sensor 15. In other examples, laser air data sensor 14 can be and/or include a type of laser light emitter and photodetector that can provide temperature information of the airflow. In such examples, laser air data sensor 14 can provide measured air temperature data (e.g., static air temperature data) to first MFP 12A and second MFP 12B.

Each of first MFP 12A and second MFP 12B include two (or more) electronics channels that are electrically connected to form two independent air data systems. For example, as is further described below, a first electronics channel of first MFP 12A includes a plurality of pressure sensors that are pneumatically connected to pressure sensing ports disposed in the barrel portion of first MFP 12A (e.g., a total pressure sensing port at a tip of the barrel portion and two alpha pressure sensing ports disposed in the barrel portion aft of the tip) to sense pressure corresponding to, e.g., impact (or total) pressure, local static pressure, and differential alpha pressure corresponding to local angle of attack of first MFP 12A. The second electronics channel of first MFP 12A includes a pressure sensor that is pneumatically connected to a static pressure sensing port disposed in the barrel portion of first MFP 12A aft of the alpha pressure sensing ports to independently sense local static pressure of the airflow over first MFP 12A.

A first electronics channel of second MFP 12A includes a pressure sensor that is pneumatically connected to static pressure sensing ports disposed aft of alpha pressure sensing ports of the barrel portion of second MFP 12B to independently sense local static pressure of the airflow over second MFP 12B. A second electronics channel of second MFP 12B includes a plurality of pressure sensing ports disposed in the barrel portion of second MFP 12B (i.e., forward of the static pressure sensing port) to sense pressure corresponding to, e.g., impact (or total) pressure, local static pressure, and differential alpha pressure corresponding to local angle of attack of second MFP 12B.

The first electronics channel of first MFP 12A is electrically coupled to receive static pressure data from the first electronics channel of second MFP 12B and to compensate (e.g., modify) determined local air data parameters based on the received static pressure data, thereby forming a first air data system providing first aircraft air data parameter outputs that are compensated for aircraft sideslip conditions. The second electronics channel of second MFP 12B is electrically coupled to receive static pressure data from the second electronics channel of first MFP 12A and to compensate determined local air data parameters based on the received static pressure data, thereby forming a second air data system providing second aircraft air data parameter outputs that are compensated for aircraft sideslip conditions.

In the example of FIG. 1, aircraft 10 is illustrated in a sideslip condition where the path of travel of aircraft 10 is indicated at 26, and angle β between travel path 26 and central plane 20 is the angle of sideslip of aircraft 10. In operation, as air flows over the exterior of aircraft 10, first MFP 12A and second MFP 12B generate local air data parameters (i.e., corresponding to the local conditions of the respective one of first MFP 12A and second MFP 12B) based on sensed pressure data, as is further described below.

In a sideslip condition, first MFP 12A experiences different flow conditions than those experienced by second MFP 12B. For instance, in the sideslip condition having sideslip angle β illustrated in FIG. 1, second MFP 12B experiences airflow having higher pressure conditions than those experienced by first MFP 12A due to the acceleration of the airflow about the aircraft exterior prior to reaching first MFP 12A. Accordingly, the first electronics channel of first MFP 12A is electrically coupled with the first electronics channel of second MFP 12B to receive static pressure data corresponding to static pressure sensed by second MFP 12B via the static pressure port pneumatically connected to a pressure sensor of the first electronics channel of second MFP 12B. The first electronics channel of first MFP 12A determines an angle of sideslip of aircraft 10 as a function of the received static pressure data and compensates the determined local air data parameters based on the angle of sideslip to provide first aircraft air data parameter outputs (e.g., aircraft angle of attack, aircraft angle of sideslip, aircraft calculated airspeed, aircraft Mach number, aircraft pressure altitude, or other aircraft air data parameters outputs). Similarly, the second electronics channel of second MFP 12B is electrically coupled with the second electronics channel of first MFP 12A to receive static pressure data corresponding to static pressure sensed by first MFP 12A via the static pressure port pneumatically connected to a pressure sensor of the second electronics channel of first MFP 12A. The second electronics channel of second MFP 12B determines an angle of sideslip of aircraft 10 as a function of the received static pressure data and compensates the determined local air data parameters based on the angle of sideslip to provide second aircraft air data parameter outputs.

Laser air data sensor 14 is configured to emit directional light (e.g., laser light) along three or more axes into the airflow about the exterior of aircraft 10. For instance, as illustrated in FIG. 1, laser air data sensor 14 can be configured to emit directional light along three axes into the airflow, though in other examples laser air data sensor 14 can emit directional light along four or more different axes. The three axes (or three of the four of more axes) can, in some examples, be mutually orthogonal, though the three axes need not be mutually orthogonal in all examples. In general, laser air data sensor 14 emits directional light into the airflow along three or more axes that are each angularly separated by a threshold angle (or angles) that enables identification of velocities of the airflow along each of the three or more distinct axes.

Laser air data sensor 14 receives returns of the directional light in each of the three or more axes due to reflection (or scattering) of the emitted directional light from molecules and/or aerosols that move with the airflow. Based on the returns of the emitted directional light, laser air data sensor 14 determines a line of sight Doppler shift of the emitted directional light along each respective axis. From the determined Doppler shift, laser air data sensor 14 determines aircraft air data parameter outputs (e.g., aircraft angle of attack, aircraft angle of sideslip, aircraft calculated airspeed) based on velocities of the airflow along each respective axis corresponding to the determined Doppler shifts, as is known in the art. In addition, laser air data sensor 14 can, in some examples, determine pressure and/or temperature information based on characteristics of returns of the emitted directional light (e.g., molecular density information), and can determine aircraft air data parameters such as aircraft pressure altitude, aircraft Mach number, or other air data parameters that are dependent upon the determined pressure and/or temperature information.

Accordingly, an air data system architecture implementing techniques described herein provides three independent air data systems formed by two dual-channel MFPs (i.e., first MFP 12A and second MFP 12B) and laser air data sensor 14. The use of laser air data sensor 14 provides a third independent set of aircraft air data parameter outputs without the need for a fourth air data sensor to provide cross-side pressure measurements. Moreover, the use of laser air data sensor 14 provides the third aircraft air data parameter outputs using LIDAR technology that is dissimilar from the pneumatic-based measurements of the MFPs. As such, air data system architectures according to techniques of this disclosure can increase overall dissimilarity of the air data systems.

While the example of FIG. 1 has been described with respect to two MFPs and one laser air data sensor, techniques of this disclosure are not so limited. For instance, in some examples, the air data system architecture can include multiple (e.g., two or more) laser air data sensors to provide further redundancy of air data parameter outputs. Similarly, in certain examples, the air data system architecture can include greater or fewer than two MFPs, such as one MFP (e.g., cross-coupled with a laser air data sensor) or three or more MFPs. In general, techniques of this disclosure enable multiple (e.g., two, three, four, or more) redundant sets of aircraft air data parameter outputs using independent and dissimilar technologies to thereby enhance the integrity and availability of the air data parameter values to consuming aircraft systems.

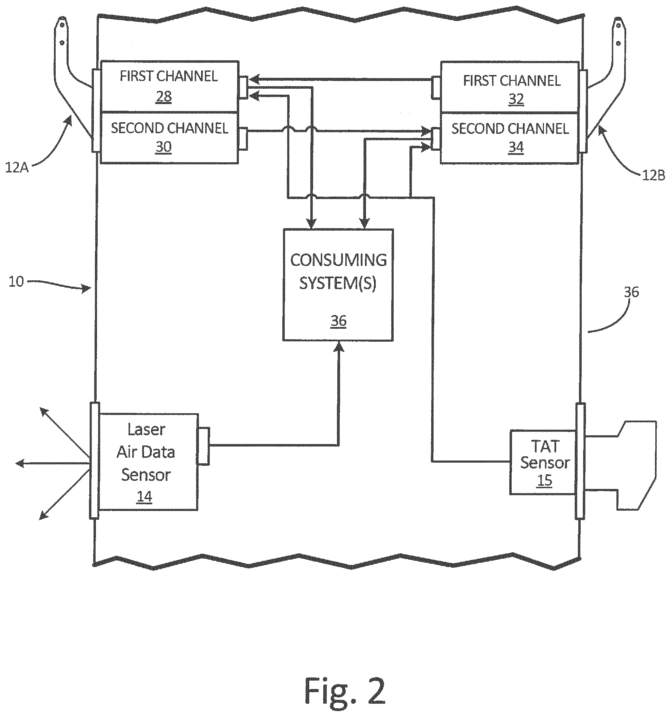

FIG. 2 is a schematic block diagram illustrating an example air data system architecture including first MFP 12A, second MFP 12B, laser air data sensor 14, and TAT sensor 15. First MFP 12A includes first electronics channel 28 and second electronics channel 30. Second MFP 12B includes first electronics channel 32 and second electronics channel 34. Each of first electronics channel 28 and second electronics channel 34 includes a plurality of pressure sensors and processing circuity for determining air data parameter outputs based on measured pressures of the airflow, as is further described below. Each of second electronics channel 30 and first electronics channel 32 includes a pressure sensor and processing circuitry for determining a static air pressure of the airflow.

TAT sensor 15 includes one or more temperature sensing elements and conditioning circuitry for sensing total air temperature of airflow about the exterior of aircraft 10. Laser air data sensor 14 includes one or more emitting light sources configured to emit directional light (e.g., laser light) into the airflow along three or more axes and one or more photodetectors configured to sense returns of the directional light along each of the three or more axes. In some examples, laser air data sensor 14 includes a plurality of light sources for emitting the directional light, such as one light source for each of the three or more axes. In other examples, laser air data sensor 14 includes a single light source and optical components for emitting directional light from the light source along each of the three or more axes. In certain examples, the one or more light sources and/or one or more photodetectors are enclosed within a housing of laser air data sensor 14. In other examples, the one or more light sources and/or one or more photodetectors are positioned within an electro-optics controller or other device that is optically coupled with laser air data sensor 14 via fiber optic cable or other optical coupling.

As illustrated in FIG. 2, first electronics channel 28 of first MFP 12A is electrically coupled with first electronics channel 32 of second MFP 12B to form a first air data system that provides first aircraft air data parameter outputs. Second electronics channel 34 of second MFP 12B is electrically coupled with second electronics channel 30 of first MFP 12A to form a second air data system that provides second aircraft air data parameter outputs. Laser air data sensor 14 forms a third air data system that provides third aircraft air data parameter outputs that are generated based on returns of emitted directional light into the airflow about the exterior of aircraft 10. TAT sensor 15 is electrically coupled with each of first electronics channel 28 and second electronics channel 34 to provide total air temperature data corresponding to measured total air temperature of the airflow to each of first electronics channel 28 and second electronics channel 34.

Each of first electronics channel 28, second electronics channel 34, and laser air data sensor 14 are electrically coupled to send (and, in some examples, receive) data with consuming system(s) 36. Consuming systems 36 can include aircraft systems, such as flight management systems, auto-flight control systems, standby instrument systems, display systems, data concentrator units, or other consuming systems of air data parameter outputs. Electrical couplings illustrated in FIG. 2 can take the form of direct electrical couplings and/or data bus couplings configured to communicate according to one or more communication protocols, such as the Aeronautical Radio, Incorporated (ARINC) 429 communication protocol, controller area network (CAN) bus communication protocol, military standard 1553 (MIL-STD-1553) communication protocol, or other analog or digital communication protocols.

In operation, each of first electronics channel 28 of first MFP 12A and second electronics channel 34 of second MFP 12B measures pressure of an airflow via a plurality of pressure sensing ports, such as a total pressure sensing port and two alpha pressure sensing ports disposed in a barrel portion of first MFP 12A and second MFP 12B, respectively. Second electronics channel 30 of first MFP 12A and first electronics channel 32 of second MFP 12B each measure static pressure of the airflow via a static pressure sensing port disposed in the barrel portion aft of the alpha pressure sensing ports of first MFP 12A and second MFP 12B, respectively. TAT sensor 15 senses total air temperature of the airflow and provides total air temperature data corresponding to the measured total air temperature to each of first electronics channel 28 and second electronics channel 34.

First electronics channel 28 generates local air data parameters (i.e., local to first MFP 12A) based on the measured pressures from the plurality of measured pressure sensors of first MFP 12A and the total air temperature data received from TAT sensor 15. Examples of local air data parameters include, but are not limited to, local angle of attack, local static pressure, local calibrated airspeed, local Mach number, and local pressure altitude.

Static pressure data corresponding to static pressure measured by first electronics channel 32 of second MFP 12B is communicated to first electronics channel 28 of first MFP 12A. First electronics channel 28 compensates (e.g., modifies) the generated local air data parameters based on functional relationships between static pressure data received from first electronics channel 32 of second MFP 12B and the generated local air data parameters to produce compensated aircraft air data parameters. For example, first electronics channel 28 can store one or more functional mappings that relate local air data parameter values to aircraft air data parameter values as a function of static pressure data received from first electronics channel 32 of second MFP 12B. Functional mappings can take the form of one or more mathematical relationships, one or more data lookup tables, or other functional mappings. First electronics channel 28 can compensate the generated local air data parameters according to the functional mappings to generate compensated aircraft air data parameter values that are provided to consuming systems 36.

In other examples, the one or more functional mappings can relate local air data parameters to aircraft air data parameter values as a function of aircraft angle of sideslip. In such examples, first electronics channel 28 can determine an aircraft angle of sideslip as a function of local total pressure, local static pressure, and local impact pressure (determined from measured pressures of first MFP 12A) as well as static pressure data received from first electronics channel 32 of second MFP 12B. First electronics channel 28 can compensate the generated local air data parameter values based on the determined aircraft angle of sideslip according to the functional mappings to generate compensated aircraft air data parameter outputs that are provided to consuming systems 36. Aircraft air data parameter outputs can include, e.g., aircraft static pressure, aircraft calculated airspeed, aircraft true airspeed, aircraft Mach number, aircraft pressure altitude, aircraft angle of attack, aircraft angle of sideslip, or other aircraft air data parameters outputs.

Accordingly, first electronics channel 28 of first MFP 12A that is electrically coupled with first electronics channel 32 of second MFP 12B forms a first air data system that provides first aircraft air data parameter outputs to consuming systems 36. Second electronics channel 34 of second MFP 12B that is electrically coupled with second electronics channel 30 of first MFP 12A forms a second air data system that provides second aircraft air data parameter outputs to consuming systems 36. That is, second electronics channel 34 generates local air data parameters (i.e., local to second MFP 12B) based on measured pressures from the plurality of measured pressure sensors of second MFP 12B and the total air temperature data received from TAT sensor 15. Static pressure data corresponding to static pressure measured by second electronics channel 30 of first MFP 12A is communicated to second electronics channel 34 of second MFP 12B. Second electronics channel 34 compensates (e.g., modifies) the generated local air data parameters based on functional relationships between static pressure data received from second electronics channel 30 of first MFP 12A (or, in certain examples, aircraft angle of sideslip) and the generated local air data parameters to produce compensated aircraft air data parameters. Compensated aircraft air data parameters generated by second electronics channel 34 of second MFP 12B are provided to consuming systems 36.

Laser air data sensor 14 forms a third air data system that provides third aircraft air data parameters based on returns of the emitted directional light. The first aircraft air data parameter outputs provided by the first air data system (e.g., formed by first electronics channel 28 and first electronics channel 32), the second aircraft air data parameter outputs provided by the second air data system (e.g., formed by second electronics channel 34 and second electronics channel 30), and the third aircraft air data parameter outputs provided by the third air data system (e.g., formed by laser air data sensor 14) can include the same air data parameters. As such, an air data system architecture according to techniques described herein can provide three independent sets of redundant air data parameter outputs for use by, e.g., consuming systems 36.

Consuming systems 36, in some examples, utilize each of the first aircraft air data parameter outputs, the second aircraft air data parameter outputs, and the third aircraft air data parameter outputs, alone or in combination, as part of a primary aircraft air data set. For instance, one or more of consuming systems 36 (e.g., a flight management system, an auto-flight control system, or any one or more other consuming systems) can utilize each of the first aircraft air data parameter outputs, the second aircraft air data parameter outputs, and the third aircraft air data parameter outputs in a voting scheme to select one or more of the first, second, and/or third air data parameter outputs for active use by consuming systems 36.

In some examples, one or more of consuming systems 36 can identify the presence of a failure condition in one or more of the first air data system, the second air data system, and the third air data system based on a comparison of the first aircraft air data parameter outputs, the second aircraft air data parameter outputs, and the third aircraft air data parameter outputs. For instance, in examples where only two of the first, second, and third aircraft air data parameter outputs agree (e.g., include parameter output values that are within a threshold deviation), consuming systems 36 can identify the presence of a failure condition in the remaining one of the first, second, and third air data systems that provides air data parameter outputs that do not agree (e.g., includes parameter output values that are not within the threshold deviation from the remaining two systems). Consuming systems 36 can refrain from utilizing air data parameter outputs from the identified air data system having the failure condition, thereby increasing integrity of the air data parameter outputs utilized for, e.g., flight control functions of aircraft 10. In addition, consuming systems 36 can, in certain examples, store, annunciate, or otherwise indicate the presence of the failure condition in the identified air data system, thereby facilitating maintenance operations on components of the identified air data system having the failure condition.

In some examples, consuming systems 36 include one or more standby (or backup) instruments or components, such as a standby flight display unit, that are utilized by flight control systems, pilots, or other systems in the event of a failure condition of designated primary air data system components. In certain examples, one or more of the first aircraft air data parameter outputs, the second aircraft air data parameter outputs, and the third aircraft air data parameter outputs can be provided to the standby instruments or components for use by, e.g., a pilot, in the event of degraded operation of designated primary instruments and/or components. For instance, the third aircraft air data parameter outputs provided by the third air data system (e.g., formed by laser air data sensor 14) can be provided to the standby instruments or components.

As such, an air data system architecture implementing techniques described herein provides three independent air data systems formed by two dual-channel MFPs (i.e., first MFP 12A and second MFP 12B) and laser air data sensor 14. LIDAR technology provided by laser air data sensor 14 to form the third air data system provides aircraft air data parameter outputs using dissimilar measurements as compared with the pneumatic-based measurements of the MFPs. Accordingly, techniques of this disclosure can help to increase dissimilarity of the air data systems.

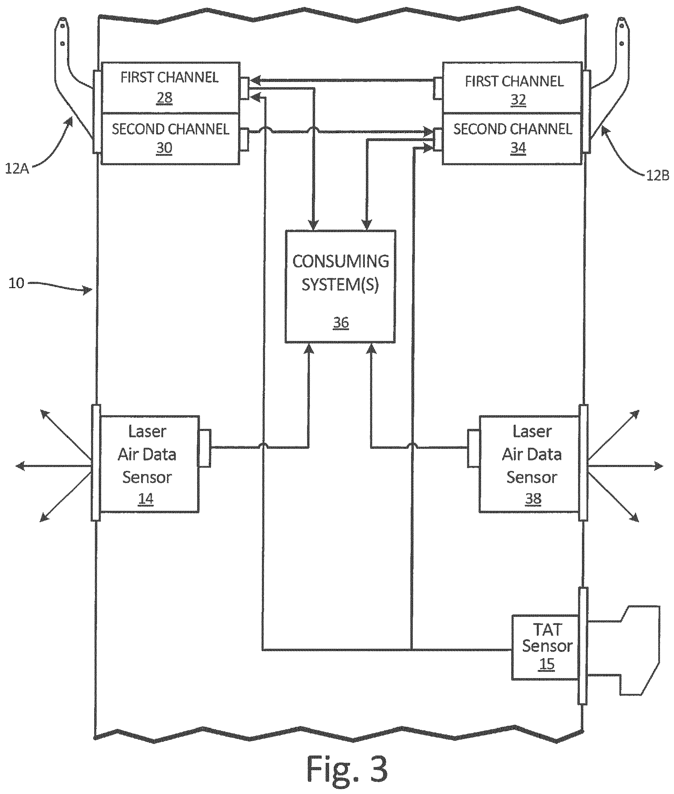

FIG. 3 is a schematic block diagram illustrating another example air data system architecture including first MFP 12A, second MFP 12B, laser air data sensor 14, TAT sensor 15, and laser air data sensor 38. The air data system architecture of FIG. 3 is substantially similar to the air data system architecture described above with respect to FIG. 2. However, in the example of FIG. 3, the air data system architecture also includes laser air data sensor 38. Laser air data sensor 38 can be substantially similar to laser air data sensor 14, in that laser air data sensor 38 is configured to emit directional light into the airflow about the exterior of aircraft 10 and to generate fourth air data parameter outputs based on returns of the emitted directional light. That is, in this example, laser air data sensor 38 provides a fourth set of aircraft air data parameter outputs to consuming systems 36, thereby further increasing redundancy of the air data parameters to consuming systems 36 and overall system availability.

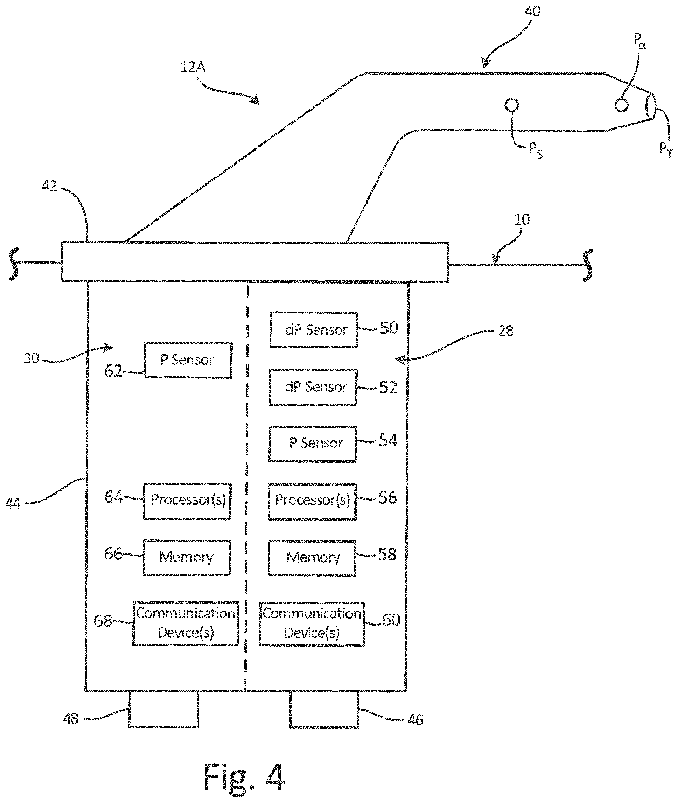

FIG. 4 is a schematic cross-sectional view of first MFP 12A. Though described with respect to first MFP 12A, it should be understood that techniques of the example of FIG. 4 are also applicable to second MFP 12B.

As illustrated in FIG. 4, first MFP 12A includes barrel portion 40, mounting plate 42, electronics housing 44, first electronics interface connector 46, and second electronics interface connector 48, though in some examples, first electronics interface connector 46 and second electronics interface connector 48 can be implemented as a single electronics interface connector. Total pressure sensing port P_{T} and alpha pressure sensing port P_{α} are disposed in barrel portion 40. Though not illustrated, a second alpha pressure sensing port is disposed in barrel portion 40 opposite alpha pressure sensing port P_{α}. Static pressure sensing port P_{S} is disposed in barrel portion 40 aft of alpha pressure sensing port P_{α} (and the opposite alpha pressure sensing port). Though not illustrated, a second static pressure sensing port is disposed in barrel portion 40 aft of the alpha pressure sensing ports P_{α} and opposite static pressure sensing port P_{S}. Electronics housing 44 encloses first electronics channel 28 and second electronics channel 30. First electronics channel 28 includes differential pressure sensor 50, differential pressure sensor 52, pressure sensor 54, one or more processors 56, computer-readable memory 58, and one or more communication devices 60. Second electronics channel 30 includes pressure sensor 62, one or more processors 64, computer-readable memory 66, and one or more communication devices 68.

Mounting plate 42 is configured to mount first MFP 12A to aircraft 10 such that barrel portion 40 is disposed externally to aircraft 10 and extends into an airflow about the exterior of aircraft 10. Electronics housing 44 extends axially from mounting plate 42 within the interior of aircraft 10. First electronics interface connector 46 and second electronics interface connector 48 each extend axially from electronics housing 44 and are each configured to mate with an electronics communications data bus or other electrical connection. Total pressure sensing port P_{T} and alpha pressure sensing port P_{α} are each pneumatically connected via a manifold or other pneumatic connection (not illustrated) to differential pressure sensor 50. Alpha pressure sensing port P_{α} as well as the opposite alpha pressure sensing port (not illustrated) are each pneumatically connected to differential pressure sensor 52. In addition, alpha pressure sensing port P_{α} is pneumatically connected to pressure sensor 54 (i.e., an absolute pressure sensor). Static pressure sensing port P_{S} and the opposite side static pressure sensing port (not illustrated) are each pneumatically connected to pressure sensor 62 (i.e., an absolute pressure sensor) through common pneumatic connection within barrel portion 40. Though differential pressure sensor 50 and differential pressure sensor 52 are described herein as differential pressure sensors, in some examples, any one or more of differential pressure sensor 50 and differential pressure sensor 52 can be implemented as two absolute pressure sensors, the difference between the two measured absolute pressures determined via, e.g., processor 56.

Examples of processor 56 and 64 can include any one or more of a microprocessor, a controller, a digital signal processor (DSP), an application specific integrated circuit (ASIC), a field-programmable gate array (FPGA), or other equivalent discrete or integrated logic circuitry. Computer-readable memory 58 and 66 can be configured to store information within first electronics channel 28 and second electronics channel 30 during operation. Computer-readable memory, in some examples, is described as a computer-readable storage medium. In certain examples, a computer-readable storage medium can include a non-transitory medium. The term "non-transitory" can indicate that the storage medium is not embodied in a carrier wave or a propagated signal. In some examples, a non-transitory storage medium can store data that can, over time, change (e.g., in RAM or cache). Computer-readable memory can include volatile memory, non-volatile memory, or both. Examples of volatile memories can include random access memories (RAM), dynamic random access memories (DRAM), static random access memories (SRAM), and other forms of volatile memories. Examples of non-volatile memories can include flash memories, forms of electrically programmable memories (EPROM) or electrically erasable and programmable (EEPROM) memories, magnetic hard discs, optical discs, floppy discs, or other forms of non-volatile memories.

First electronics channel 28 and second electronics channel 30 utilize communication device 60 and communication device 68, respectively, to communicate with external devices via first electronics interface connector 46 and second electronics interface connector 48. For example, communication devices 60 and 68 can be network interface cards (or other interface devices) configured to send and receive data over a communications network and/or data bus according to one or more communications protocols, such as the ARINC 429 communication protocol, CAN bus communication protocol, MIL-STD-1553 communication protocol, or other communication protocol.

Circuitry and processor-executable instructions (e.g., stored at computer-readable memory 58 and 66) can be dissimilar between first electronics channel 28 and second electronics channel 30. Dissimilarity between first electronics channel 28 and second electronics channel 30 can be achieved by, e.g., utilizing different components (e.g., different processors from different manufacturers) and/or different processor-executable instructions (e.g., different software or firmware developed by different development teams). As one example, processors 56 and 64 can be different processors or controllers provided by different chip manufacturers. Similarly, computer-readable memory 58 can be of a different type and/or provided by a different manufacturer than that of computer-readable memory 66. Communication devices 60 and 68 can be, e.g., ARINC 429 interfaces provided by different manufacturers or different types of interface devices (e.g., an ARINC 429 interface and a MIL-STD-1553). In general, as the degree of dissimilarity between first electronics channel 28 and second electronics channel 30 increases, the probability of occurrence of a common mode error decreases.

In operation, first electronics channel 28 receives total air temperature data from TAT sensor 15 (FIGS. 1-3). First electronics channel 28 utilizes the received total air temperature data as well as differential pressure sensor 50 (measuring differential pressure corresponding to impact pressure), differential pressure sensor 52 (measuring differential pressure corresponding to angle of attack), and pressure sensor 54 (measuring absolute pressure corresponding to local static pressure) to sense pressures of the airflow about the exterior of aircraft 10 and generate local air data parameters including, e.g., local static pressure, local calculated airspeed, local true airspeed, local Mach number, local pressure altitude, and local angle of attack, as is known in the art. Second electronics channel 30 utilizes pressure sensor 62 to sense static pressure of the airflow. Second electronics channel 30 transmits static pressure data corresponding to the measured static pressure to second electronics channel 34 of second MFP 12B (FIGS. 2 and 3).

First electronics channel 28 receives static pressure data corresponding to static pressure measured by first electronics channel 32 (FIGS. 2 and 3) of second MFP 12B via first electronics interface connector 46 and communication device 60. Processor 56 accesses functional mappings stored at computer-readable memory 58 to compensate the local air data parameters determined by first electronics channel 28 (based on pressure measurements from differential pressure sensor 50, differential pressure sensor 52, and pressure sensor 54) and generate compensated first aircraft air data parameter outputs. First electronics channel 28 outputs the compensated first air data parameter outputs to consuming systems 36 (FIGS. 2 and 3) via communication device 60 and first electronics interface connector 46. It should be understood that second electronics channel 34 of second MFP 12B that is electrically connected to second electronics channel 30 performs similar operations to generate and output compensated second aircraft air data parameter outputs to consuming systems 36.

Accordingly, an air data system architecture implementing techniques of this disclosure can include two dual-channel MFPs that are digitally interconnected to form two independent and, in certain examples, dissimilar air data systems providing two sets of aircraft air data parameter outputs that are compensated for aircraft sideslip conditions. A third air data system formed by a laser air data sensor (e.g., laser air data sensor 14) provides a third independent set of aircraft air data parameter outputs utilizing measurement technologies that are dissimilar in nature from the pneumatic-based pressure measurements of the MFPs. Additional laser air data sensors and/or MFPs can provide further redundancy of aircraft air data parameter outputs. Techniques described herein can therefore help to increase reliability and availability of the aircraft air data parameters to consuming systems.

The following are non-exclusive descriptions of possible embodiments of the present invention.

A system includes a first multi-function probe (MFP), a second MFP, and a laser air data sensor. The first MFP includes a first plurality of pressure sensing ports for sensing pressure of airflow about an aircraft exterior. The first MFP has a first electronics channel and a second electronics channel. The second MFP includes a second plurality of pressure sensing ports for sensing the pressure of airflow about the aircraft exterior. The second MFP has a first electronics channel and a second electronics channel. The first electronics channel of the second MFP is electrically coupled with the first electronics channel of the first MFP to form a first air data system providing first aircraft air data parameter outputs. The second electronics channel of the second MFP is electrically coupled with the second electronics channel of the first MFP to form a second air data system providing second aircraft air data parameter outputs. The laser air data sensor forms a third air data system providing third aircraft air data parameter outputs. The laser air data sensor is configured to emit directional light into airflow about the aircraft exterior and to generate the third aircraft air data parameter outputs based on returns of the emitted directional light.

The system of the preceding paragraph can optionally include, additionally and/or alternatively, any one or more of the following features, configurations and/or additional components:

The laser air data sensor can be configured to emit the directional light in at least three directions into airflow about the aircraft exterior. The laser air data sensor can be configured to determine a line of sight Doppler shift for the directional light in each of the at least three directions based on returns of the emitted directional light in each of the at least three directions. The laser air data sensor can be configured to generate the third aircraft air data parameters based on the determined line of sight Doppler shift in each of the at least three directions.

Three of the at least three directions of the directional light can be angularly separated by one or more threshold angles that enable identification of velocities of the airflow along each of the at least three axes.

Each of the first aircraft air data parameter outputs, the second aircraft air data parameter outputs, and the third aircraft air data parameter outputs can include a same set of air data parameters.

Each of the first aircraft air data parameter outputs, the second aircraft air data parameter outputs, and the third aircraft air data parameter outputs can be provided to consuming systems of the aircraft.

The consuming systems can include a standby instrument. The third aircraft air data parameter outputs can be provided to the standby instrument.

The first MFP can be positioned at a first side of the aircraft. The second MFP can be positioned at a second side of the aircraft opposite the first side.

Each of the first MFP and the second MFP can include a barrel portion configured to extend into airflow about the aircraft exterior. The first plurality of pressure sensing ports can be disposed on the barrel portion of the first MFP. The second plurality of pressure sensing ports can be disposed on the barrel portion of the second MFP.

Each of the first plurality of pressure sensing ports of the first MFP and the second plurality of pressure sensing ports of the second MFP can include: a total pressure sensing port disposed at a forward tip of the respective barrel portion; a first alpha pressure sensing port disposed aft of the forward tip at a top side of the respective barrel portion; a second alpha pressure sensing port disposed aft of the forward tip at a bottom side of the respective barrel portion opposite the top side; and a static pressure sensing port disposed aft of each of the first alpha pressure sensing port and the second alpha pressure sensing port at the top side of the respective barrel portion.

The total pressure sensing port, the first alpha pressure sensing port, and the second alpha pressure sensing port of the first MFP can be pneumatically connected to a plurality of pressure sensors included in the first electronics channel of the first MFP. The static pressure sensing port of the first MFP can be pneumatically connected to a pressure sensor included in the second electronics channel of the first MFP. The total pressure sensing port, the first alpha pressure sensing port, and the second alpha pressure sensing port of the second MFP can be pneumatically connected to a plurality of pressure sensors included in the second electronics channel of the second MFP. The static pressure sensing port of the second MFP can be pneumatically connected to a pressure sensor included in the first electronics channel of the second MFP.

The first electronics channel of the first MFP can be configured to receive static pressure data received from the first electronics channel of the second MFP. The second electronics channel of the second MFP can be configured to receive static pressure data received from the second electronics channel of the second MFP.

The first electronics channel of the first MFP can be configured to compensate the first aircraft air data parameter outputs based on the static pressure data received from the first electronics channel of the second MFP. The second electronics channel of the second MFP can be configured to compensate the second aircraft air data parameter outputs based on the static pressure data received from the second electronics channel of the first MFP.

The first electronics channel of the first MFP can be configured to determine a first aircraft angle of sideslip based on the static pressure data received from the first electronics channel of the second MFP and to compensate the first aircraft air data parameter outputs based on the determined first aircraft angle of sideslip. The second electronics channel of the second MFP can be configured to determine a second aircraft angle of sideslip based on the static pressure data received from the second electronics channel of the first MFP and to compensate the second aircraft air data parameter outputs based on the determined second aircraft angle of sideslip.

The first electronics channel of the first MFP and the second electronics channel of the second MFP can each be configured to receive air temperature measurement data of airflow about the aircraft exterior. The first electronics channel of the first MFP can be configured to determine the first aircraft air data parameter outputs based on the received air temperature measurement data. The second electronics channel of the second MFP can be configured to determine the second aircraft air data parameter outputs based on the received air temperature measurement data.

The laser air data sensor can be configured to provide the air temperature measurement data to each of the first electronics channel of the first MFP and the second electronics channel of the second MFP.

The system can further include a total air temperature sensor that is electrically coupled with each of the first electronics channel of the first MFP and the second electronics channel of the second MFP to provide the air temperature measurement data to each of the first electronics channel of the first MFP and the second electronics channel of the second MFP.

A method includes generating first aircraft air data parameter outputs from a first electronics channel of a first multi-function probe (MFP) based on pressure of airflow about an aircraft exterior sensed by the first MFP and static pressure data corresponding to static pressure of airflow about the aircraft exterior received from a first electronics channel of a second MFP. The method further includes generating second aircraft air data parameter outputs from a second electronics channel of the second MFP based on pressure of airflow about the aircraft exterior sensed by the second MFP and static pressure data corresponding to static pressure of airflow about the aircraft exterior received from a second electronics channel of the first MFP. The method further includes generating third aircraft air data parameter outputs from a laser air data sensor based on returns of directional light emitted by the laser air data sensor into airflow about the aircraft exterior.

The method of the preceding paragraph can optionally include, additionally and/or alternatively, any one or more of the following features, configurations, operations and/or additional components:

The method can further include providing each of the first aircraft air data parameters, the second aircraft air data parameters, and the third aircraft air data parameters to consuming systems of the aircraft.

The method can further include determining the presence of a failure condition of one or more of the first MFP, the second MFP, and the laser air data sensor based on a comparison of the first aircraft air data parameter outputs, the second aircraft air data parameter outputs, and the third aircraft air data parameter outputs.

A system includes a first air data system configured to provide first aircraft air data parameter outputs, a second air data system configured to provide second aircraft air data parameter outputs, and a third air data system configured to provide third aircraft air data parameter outputs. The first air data system includes a first electronics channel of a first multi-function probe (MFP) and a first electronics channel of a second MFP. The first MFP has a first plurality of pressure sensing ports for sensing pressure of airflow about an aircraft exterior. The second MFP has a second plurality of pressure sensing ports for sensing pressure of airflow about the aircraft exterior. The second air data system includes a second electronics channel of the second MFP and a second electronics channel of the first MFP. The third air data system includes a laser air data sensor. The laser air data sensor is configured to emit directional light into airflow about the aircraft exterior and to generate the third aircraft air data parameter outputs based on returns of the emitted directional light.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A system comprising:
a first multi-function probe (MFP) (12A) comprising a first plurality of pressure sensing ports for sensing pressure of airflow about an aircraft exterior, the first MFP having a first electronics channel and a second electronics channel;
a second MFP (12B) comprising a second plurality of pressure sensing ports for sensing the pressure of airflow about the aircraft exterior, the second MFP having a first electronics channel and a second electronics channel, the first electronics channel of the second MFP electrically coupled with the first electronics channel of the first MFP to form a first air data system providing first aircraft air data parameter outputs, the second electronics channel of the second MFP electrically coupled with the second electronics channel of the first MFP to form a second air data system providing second aircraft air data parameter outputs; and
a laser air data sensor (14) forming a third air data system providing third aircraft air data parameter outputs, the laser air data sensor configured to emit directional light into airflow about the aircraft exterior and to generate the third aircraft air data parameter outputs based on returns of the emitted directional light.

2. The system of claim 1,
wherein the laser air data sensor (14) is configured to emit the directional light in at least three directions into airflow about the aircraft exterior;
wherein the laser air data sensor (14) is configured to determine a line of sight Doppler shift for the directional light in each of the at least three directions based on returns of the emitted directional light in each of the at least three directions; and
wherein the laser air data sensor (14) is configured to generate the third aircraft air data parameters based on the determined line of sight Doppler shift in each of the at least three directions, and preferably
wherein three of the at least three directions of the directional light are angularly separated by one or more threshold angles that enable identification of velocities of the airflow along each of the at least three axes.

3. The system of claim 1 or 2,
wherein each of the first aircraft air data parameter outputs, the second aircraft air data parameter outputs, and the third aircraft air data parameter outputs comprise a same set of air data parameters.

4. The system of claim 1, 2 or 3,
wherein each of the first aircraft air data parameter outputs, the second aircraft air data parameter outputs, and the third aircraft air data parameter outputs are provided to consuming systems of the aircraft, and preferably
wherein the consuming systems comprise a standby instrument; and
wherein the third aircraft air data parameter outputs are provided to the standby instrument.

5. The system of any preceding claim,
wherein the first MFP (12A) is positioned at a first side of the aircraft; and
wherein the second MFP (12B) is positioned at a second side of the aircraft opposite the first side.

6. The system of any preceding claim,
wherein each of the first MFP (12A) and the second MFP (12B) comprise a barrel portion configured to extend into airflow about the aircraft exterior;
wherein the first plurality of pressure sensing ports is disposed on the barrel portion of the first MFP (12B); and
wherein the second plurality of pressure sensing ports is disposed on the barrel portion of the second MFP.

7. The system of claim 6,
wherein each of the first plurality of pressure sensing ports of the first MFP (12A) and the second plurality of pressure sensing ports of the second MFP (12B) comprise:
a total pressure sensing port disposed at a forward tip of the respective barrel portion;
a first alpha pressure sensing port disposed aft of the forward tip at a top side of the respective barrel portion;
a second alpha pressure sensing port disposed aft of the forward tip at a bottom side of the respective barrel portion opposite the top side; and
a static pressure sensing port disposed aft of each of the first alpha pressure sensing port and the second alpha pressure sensing port at the top side of the respective barrel portion.

8. The system of claim 6,
wherein the total pressure sensing port, the first alpha pressure sensing port, and the second alpha pressure sensing port of the first MFP are pneumatically connected to a plurality of pressure sensors included in the first electronics channel of the first MFP (12A);
wherein the static pressure sensing port of the first MFP (12A) is pneumatically connected to a pressure sensor included in the second electronics channel of the first MFP (12A);
wherein the total pressure sensing port, the first alpha pressure sensing port, and the second alpha pressure sensing port of the second MFP (12B) are pneumatically connected to a plurality of pressure sensors included in the second electronics channel of the second MFP (12B); and
wherein the static pressure sensing port of the second MFP (12B) is pneumatically connected to a pressure sensor included in the first electronics channel of the second MFP (12B).

9. The system of any preceding claim,
wherein the first electronics channel of the first MFP (12A) is configured to receive static pressure data received from the first electronics channel of the second MFP; and
wherein the second electronics channel of the second MFP (12B) is configured to receive static pressure data received from the second electronics channel of the second MFP.

10. The system of claim 9,
wherein the first electronics channel of the first MFP (12A) is configured to compensate the first aircraft air data parameter outputs based on the static pressure data received from the first electronics channel of the second MFP (12B); and
wherein the second electronics channel of the second MFP (12B) is configured to compensate the second aircraft air data parameter outputs based on the static pressure data received from the second electronics channel of the first MFP (12A).

11. The system of claim 9,
wherein the first electronics channel of the first MFP (12A) is configured to determine a first aircraft angle of sideslip based on the static pressure data received from the first electronics channel of the second MFP (12B) and to compensate the first aircraft air data parameter outputs based on the determined first aircraft angle of sideslip; and
wherein the second electronics channel of the second MFP (12B) is configured to determine a second aircraft angle of sideslip based on the static pressure data received from the second electronics channel of the first MFP (12A) and to compensate the second aircraft air data parameter outputs based on the determined second aircraft angle of sideslip.

12. The system of any preceding claim,
wherein the first electronics channel of the first MFP (12A) and the second electronics channel of the second MFP (12B) are each configured to receive total air temperature measurement data of airflow about the aircraft exterior;
wherein the first electronics channel of the first MFP (12A) is configured to determine the first aircraft air data parameter outputs based on the received total air temperature measurement data; and
wherein the second electronics channel of the second MFP (12B) is configured to determine the second aircraft air data parameter outputs based on the received total air temperature measurement data.

13. The system of claim 12,
wherein the laser air data sensor (14) is configured to provide the total air temperature measurement data to each of the first electronics channel of the first MFP and the second electronics channel of the second MFP (12A), and/or further comprising:
a total air temperature sensor electrically coupled with each of the first electronics channel of the first MFP (12A) and the second electronics channel of the second MFP to provide the total air temperature measurement data to each of the first electronics channel of the first MFP (12A) and the second electronics channel of the second MFP (12B).

14. A method comprising:
generating first aircraft air data parameter outputs from a first electronics channel of a first multi-function probe (MFP) (12A) based on pressure of airflow about an aircraft exterior sensed by the first MFP (12A) and static pressure data corresponding to static pressure of airflow about the aircraft exterior received from a first electronics channel of a second MFP (12B);
generating second aircraft air data parameter outputs from a second electronics channel of the second MFP (12B) based on pressure of airflow about the aircraft exterior sensed by the second MFP (12B) and static pressure data corresponding to static pressure of airflow about the aircraft exterior received from a second electronics channel of the first MFP (12A); and
generating third aircraft air data parameter outputs from a laser air data sensor based on returns of directional light emitted by the laser air data sensor into airflow about the aircraft exterior.

15. The method of claim 14, further comprising:
providing each of the first aircraft air data parameters, the second aircraft air data parameters, and the third aircraft air data parameters to consuming systems of the aircraft, and/or further comprising:
determining the presence of a failure condition of one or more of the first MFP (12A), the second MFP (12B), and the laser air data sensor based on a comparison of the first aircraft air data parameter outputs, the second aircraft air data parameter outputs, and the third aircraft air data parameter outputs.
